(19) Europäisches Patentamt
European Patent Office
Office européen des brevets

(11) Publication number: 0 404 250 A2

# (12) EUROPEAN PATENT APPLICATION

(21) Application number: 90201580.9

(51) Int. Cl.[5]: C07F 9/53

(22) Date of filing: 18.06.90

(30) Priority: 22.06.89 US 370228

(43) Date of publication of application:
27.12.90 Bulletin 90/52

(84) Designated Contracting States:
DE FR GB

(71) Applicant: AKZO N.V.
Velperweg 76
NL-6824 BM Arnhem(NL)

(72) Inventor: Telschow, Jeffrey Earl
416 Benedict Avenue
Tarrytown, New York 10591(US)

(74) Representative: Schalkwijk, Pieter Cornelis et al
AKZO N.V., Patent Department (Dept. CO),
P.O. Box 9300
NL-6800 SB Arnhem(NL)

## (54) Preparation of N,N-dialkylcarbamoylmethylphosphine oxide.

(57) An N,N-dialkylcarbamoylmethylphosphine oxide can be formed by reacting a phosphinate ester with an aluminum hydride reducing agent to form the anion of the secondary phosphine oxide which is then alkylated by reaction with a reactive organohalide. Any over-reduction of the phosphinate ester to the secondary phosphine by-product formed by over-reduction of the phosphinate ester, can be converted to more of the desired product by treatment with hydrogen peroxide in aqueous base using a phase transfer catalyst.

EP 0 404 250 A2

Xerox Copy Centre

# Preparation of N,N-dialkylcarbomoylmethylphosphine oxide

## BACKGROUND OF THE INVENTION

### Field of the Invention

The present invention relates to an improved process for the preparation of N,N-dialkylcarbamoylmethylphosphine oxide by treating the anion of a secondary phosphine oxide with a reactive organohalide.

### Description of the Prior Art

Tertiary phosphine oxides of the general formula R3P(O) can be formed from the anion of a secondary phosphine oxide R2PO- by reacting such an anion with a reactive organohalide RX. A representative type of tertiary phosphine oxide which can be formed in this manner, in accordance with the present invention, are the N,N-dialkylcarbamoylmethylphosphine oxide transuranium extractants of the general formula

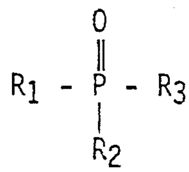

where $R_1$ can be phenyl, $R_2$ can be higher alkyl (e.g., $C_8H_{17}$), and $R_3$ can be N,N-dialkylcarbamoylmethyl of the formula -CH2C(O)NR′2, where R′ can be alkyl (e.g., 2-methylpropyl) in both cases.

The foregoing type of tertiary phosphine oxide can be synthesized from the anion of a secondary phosphine oxide having the formula

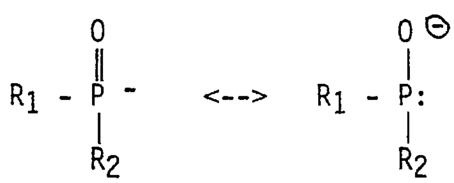

with $R_1$ and $R_2$ as defined above, by reaction with a reactive organohalide ($X-R_3$) such as N,N-diisobutylcarbamoylmethyl chloride. A route of this type is described by E. P. Horwitz et al., in Separation Science and Technology, Vol. 17, pp. 1261-1279 (1982) for synthesis of the aforementioned transuranium extractants. In regard to arriving at the anion of the secondary phosphine oxide, Horwitz et al. teach reaction of a Grignard reagent ($R_2MgBr$) with a phosphinate ester of the formula $R_1P(O)H(OR'')$ where R″ is lower alkyl. When such a route is used, it has been found possible to achieve synthesis of the crude tertiary phosphine in about 60-70 area % assay by gas chromatography.

## SUMMARY OF THE INVENTION

The instant invention relates to a process for forming the above-described anion of a secondary phosphine oxide by reacting a phosphinate ester with an aluminum hydride reducing agent. Any over-reduction of the ester to the secondary phosphine can be remedied by treatment with hydrogen peroxide oxidizing agent.

## DETAILED DESCRIPTION OF THE INVENTION

The anion of the secondary phosphine oxide of the formula

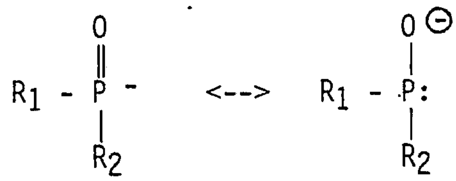

as defined above, is formed in accordance with the present invention by reducing a phosphinate ester of the formula

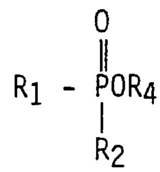

where $R_4$ is alkyl with an aluminum hydride reducing agent which may have the formula

$NaAlH_{4-x}Z_x$

where x is an integer of from 1 to 3, and wherein Z is an organic residue derived by splitting off an active atom, such as hydrogen, from an organic compound. Further details regarding such sodium aluminum hydrides can be found in U.S. Patent No. 3,507,895 which is incorporated herein by reference. The phosphinate ester, which is reacted with such an aluminum hydride reducing agent, can be formed by reaction of a compound of the formula R1P(O)H(OR) with a 1-olefin (e.g.. 1-octene) at elevated temperature (e.g., about 110° C), said compound being formed from R1PX2, X being halogen (such as chlorine) and alcohol (e.g., butanol).

A suitable aluminum hydride reducing agent for use in the instant invention is sodium bis(2-methoxyethoxy) aluminum hydride which is commercially available under the trademark VITRIDE from Hexcel. The amount of reducing agent which is used is the amount sufficient to yield from about two moles of active hydrogen to about four moles of active hydrogen per mole of the phosphinate ester, and the reduction reaction can be performed at temperatures ranging from about -50° C to about 100° C.

If the amount of reducing agent used results in an over-reduction of the phosphinate ester to the corresponding secondary phosphine, this secondary phosphine can be treated with hydrogen peroxide and base to oxidize it to the desired anion of the secondary phosphine oxide. This oxidation reaction is somewhat surprising since it was thought that the oxidation of the secondary phosphine oxide would proceed all the way to the phosphinic acid. In general, about one mole of hydrogen peroxide per mole of the secondary phosphine oxide will be used at temperatures of from about -20° C to about 60° C. Preferably, this oxidation is performed in aqueous base (e.g., sodium hydroxide solution) using a phase transfer catalyst (e.g., tetrabutylammonium chloride).

The following Examples illustrate certain embodiments of the instant invention.

## Example 1

This Example illustrates formation of N,N-bis(2-methylpropyl)-2-octylphenylphosphinyl-acetamide (CMPO), a very selective transuranium extractant.

A 70 wt % toluene solution of sodium dihydrobis(2-methoxyethoxy)aluminate reducing agent (VITRIDE brand), 29 ml (0.105 mole), was added dropwise to 31.0 grams (0.10 mole) of butyl octylphenylphosphinate (BOPP) to maintain a temperature of about 30° C without external cooling, in 50 ml of dry toluene in a 250 ml four-neck flask under nitrogen atmosphere. After 1.7 hours addition time, the yellow solution which resulted was heated at about 45° C for about one hour. Gas chromatographic analysis showed 28.6 area % for octylphenylphosphine (OPP) by-product from over-reduction and 60.9 area % for the desired (anion of) octylphenylphosphine oxide (OPPO). Then, N,N-diisobutylcarbamoylmethyl chloride (DIBCA), 18.5 grams, 0.09 mole, was added over a twenty minute period at 40° C + 5° C, and the pale yellow, slightly cloudy solution which resulted was heated and stirred at 45-50° C. Gas chromatographic analysis after three hours (at 50° C) showed 65.8 area % of CMPO.

The reaction mixture was cooled in a water bath as 30 ml of 1% sodium hydroxide solution was added to form a thick pasty slurry. The mixture was removed from the water bath and 10 ml of 30% hydrogen

peroxide was added, and the mixture was stirred well. The temperature rose from 24°C to 40°C over about a ten minute period. After fifteen minutes stirring, another 30 ml of 1% sodium hydroxide was added, followed by 15 ml of toluene. The lower layer became thick with solids but was still fluid. The layers were separated and the lower aqueous layer was washed again with toluene. The toluene layers were combined, washed twice with water and then stripped for one hour at about 80°C/1 mm Hg to yield 37.0 grams of a viscous, colorless oil. Gas chromatographic analysis showed that the wash with hydrogen peroxide converted the OPP (substantially none left afterwards) to OPPO:

| | Area % | | | | |
|---|---|---|---|---|---|
| Sample | DIBCA | OPP | OPPO | BOPP | CMPO |
| After VITRIDE(1) | - | 28.6 | 60.9 | 2.6 | - |
| After DIBCA(2) | 14.5 | 20.6 | 0.0 | 1.6 | 58.6 |
| After DIBCA(3) | 9.0 | 14.7 | 0.0 | 1.4 | 66.5 |
| After DIBCA(4) | 9.3 | 0.1 | 13.1 | 1.9 | 65.6 |
| Final CMPO Product | 9.2 | 0.0 | 10.3 | 1.9 | 71.7 |

(1) one hour at 45°C (sulfuric acid workup).
(2) one hour at 50°C (sulfuric acid workup).
(3) three hours at 50°C (sodium hydroxide workup).
(4) three hours at 50°C with sodium hydroxide and hydrogen peroxide.

Example 2

This illustrates the phase transfer catalyzed enrichment of crude CMPO.

Two vials, each containing two drops of the viscous colorless oil from Example 1 (the crude CMPO), had added to them four drops of toluene, a magnetic stir bar, and

in vial (1) - three drops of 15% sodium hydroxide; and

in vial (2) - three drops of a solution made from two drops of 40% $(C_4H_9)4NOH$ in thirty drops of 15% sodium hydroxide.

After rapid stirring at 25°C gas chromatographic analysis showed the following:

| | Area % | | |
|---|---|---|---|
| Sample | DIBCA | OPPO | CMPO |
| Crude CMPO | 9.2 | 10.3 | 71.7 |
| 1st Vial (2 hr/25oC) | 7.9 | 8.1 | 74.8 |
| 2nd Vial (2 hr/25oC) | 3.7 | 4.4 | 80.7 |
| 2nd Vial (18 hr/25oC) | 0.25 | 1.1 | 87.7 |

Since the octylphenylphosphine (OPP) was converted to the oxide (OPPO) during hydrogen peroxide workup in Example 1, the above data show that it is possible to get this to react, as an anion, with residual DIBCA and generate more CMPO.I

**Claims**

1. A process for the preparation of an N,N-dialkylcarbamoylmethylphosphine oxide by treatment of the anion of a secondary phosphine oxide with a reactive organohalide, characterized in that the anion of the secondary phosphine oxide is formed by reacting a phosphinate ester with an aluminum hydride reducing agent.

2. A process according to claim 1, characterized in that the N,N-dialkylcarbamoylmethylphosphine oxide is N,N-bis(2-methylpropyl-2-octylphenylphosphinyl-acetamide.

3. A process according to claim 1 or 2, characterized in that the aluminum hydride reducing agent is of the formula $NaAlH_{4-x}Z_x$, where x is an integer of from 1 to 3.

4. A process according to any one of the preceding claims, characterized in that the amount of reducing agent used is the amount sufficient to yield from about 2 moles of active hydrogen to about 4 moles of active hydrogen per mole of phosphinate ester.

5. A process according to any one of the preceding claims, characterized in that the phosphinate ester is of the formula

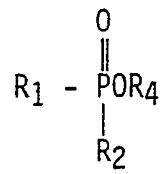

where $R_1$ and $R_2$ are selected from phenyl and higher alkyl, respectively, and $R_4$ is alkyl.

6. A process according to claim 5, characterized in that the reducing agent is a sodium aluminum hydride reducing agent and is used to yield from about 2 moles of active hydrogen to about 4 moles of active hydrogen per mole of phosphinate ester.

7. A process according to claim 5 or 6, characterized in that the phosphinate ester is butyl octylphenylphosphinate.

8. A process according to any one of the preceding claims, characterized in that any secondary phosphine by-product formed by over-reduction is treated with hydrogen peroxide and a base to oxidize it to the anion of the secondary phosphine oxide.

9. A process according to claim 8, characterized in that about one mole of hydrogen peroxide is used per mole of secondary phosphine oxide.

10. A process according to claim 8 or 9, characterized in that treatment occurs at a temperature ranging from about -20° C to about 60° C.